# EUROPEAN PATENT APPLICATION

(11) **EP 4 486 011 A1**
(43) Date of publication of application: **01.01.2025**
(21) Application number: 23781367.0
(22) Date of filing: 29.03.2023
(51) Int. Cl.: H04W 48/18, H04W 48/16, H04W 24/04, H04W 24/08

(54) **METHOD AND DEVICE FOR COMMUNICATION IN WIRELESS COMMUNICATION SYSTEM SUPPORTING MULTIPLE NETWORK SLICE ADMISSION CONTROL FUNCTIONS**

(30) Priority: 29.03.2022 KR 20220039243
(71) Applicant: Samsung Electronics Co., Ltd, Suwon-si, Gyeonggi-do 16677 (KR)
(72) Inventor: SUH, Dongeun, Suwon-si Gyeonggi-do 16677 (KR)
(74) Representative: Nederlandsch Octrooibureau
(86) International application number: PCT/KR2023/004210
(87) International publication number: WO 2023/191514

(57) **Abstract**

The present disclosure relates to a method and device for communication in a wireless communication system supporting multiple network slice admission control functions (NSACFs). The method performed by a NSACF that monitors and controls the number of registered UEs for each network slice in a wireless communication system supporting multiple NSACFs according to an embodiment of the present disclosure comprises the steps of: receiving an NSAC-related request message from an AMF that manages the mobility of a UE; identifying whether the received NSAC-related request message includes an indication based on a network slice previously granted to the UE; and in case that the received NSAC-related request message includes the indication, accepting the request message.

## Description

### [Technical Field]

The disclosure relates to a method and a device for efficient communication in a wireless communication system supporting a network slice.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure provides a method and a device for efficient communication in a wireless communication system supporting multiple network slice admission control functions (NSACFs).

The disclosure also provides a method and a device for efficiently controlling a network slice quota in a wireless communication system supporting multiple NSACFs.

Further, the disclosure provides a method and a device for supporting continuity of a service in case that an NSACF is changed in a wireless communication system supporting multiple NSACFs.

### [Technical Solution]

According to an embodiment of the disclosure, a method performed by a network slice admission control function (NSACF) for monitoring and controlling a number of user equipments (UEs) registered per network slice in a wireless communication system supporting multiple NSACFs includes receiving a network slice admission control (NSAC)-related request message from an access and mobility management function (AMF) managing mobility of a UE, identifying whether the received NSAC-related request message includes an indication based on a network slice previously allowed for the UE, and accepting the requesting message in case that the received NSAC-related request message includes the indication.

According to an embodiment of the disclosure, an NSACF for monitoring and controlling a number of UEs registered per network slice in a wireless communication system supporting multiple NSACFs includes a communication interface, and a processor configured to receive an NSAC-related request message from an AMF managing mobility of a UE through the communication interface, to identify whether the received NSAC-related request message includes an indication based on a network slice previously allowed for the UE, and to accept the requesting message in case that the received NSAC-related request message includes the indication.

According to an embodiment of the disclosure, an AMF for managing mobility of a UE in a wireless communication system supporting multiple NSACFs includes a communication interface, and a processor configured to determine an indication based on a network slice previously allowed for the UE in case that transmission of an NSAC-related request message to an NSACF configured to monitor and control a number of UEs registered per network slice is triggered, and to transmit the NSAC-related request message including the indication to the NSACF through the communication interface.

### [Brief Description of Drawings]

FIG. 1 illustrates a configuration example of a wireless communication system supporting multiple NSACFs according to an embodiment of the disclosure;
FIG. 2 illustrates a location-based NSACF discovery/selection procedure in a wireless communication system supporting multiple NSACFs according to an embodiment of the disclosure;
FIG. 3 is a flowchart illustrating an NSAC exemption procedure performed by an AMF in case that an NSACF is changed in a wireless communication system supporting multiple NSACFs according to an embodiment of the disclosure;
FIG. 4 is a flowchart illustrating an NSAC exemption procedure performed by an SMF in case that an NSACF is changed in a wireless communication system supporting multiple NSACFs according to an embodiment of the disclosure;
FIG. 5 is a flowchart illustrating a procedure of storing an NSACF selected for NSAC exemption in UE context in a UE registration procedure in a wireless communication system supporting multiple NSACFs according to an embodiment of the disclosure; and
FIG. 6 illustrates a configuration example of a network entity according to an embodiment of the disclosure.

### [Mode for Carrying out the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the disclosure, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. The disclosure may be applied to the 3GPP 5GS/NR (5th generation mobile communication standards).

In the disclosure, a base station is an entity that allocates resources to a user equipment (UE), and may be at least one of a gNode B, a gNB, an eNode B, an eNB, a Node B, a base station (BS), a radio access network (RAN), a base station controller, and a node on a network. The base station may be a network entity including at least one of an integrated access and backhaul-donor (IAB-donor) which is a gNB providing network access to a UE(s) via a network of backhaul and access links, and an IAB-node which is an RAN node supporting an NR access link(s) to a UE(s) and supporting NR backhaul links to the IAB-donor or any other IAB-node in an NR system (hereinafter 5G system). In the disclosure, the UE may be not only cellular phones, mobile stations (MSs), smartphones, computers, NB-IoT devices, and sensors, but also various wireless communication devices.

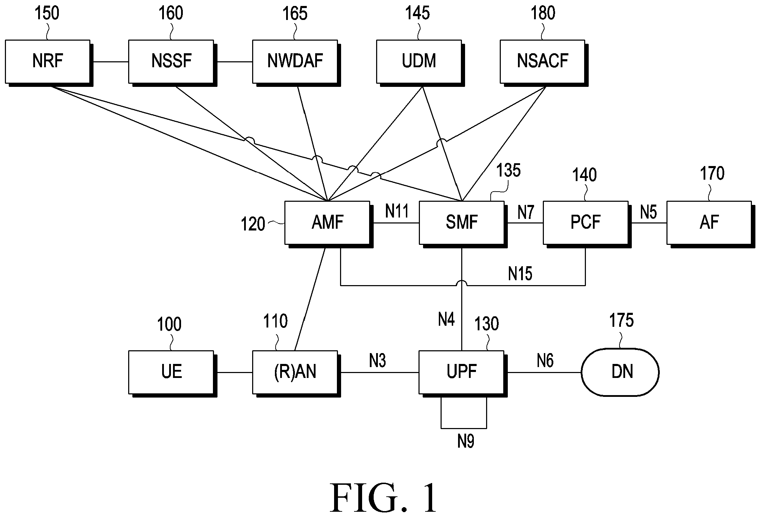

In the disclosure, a network technology may be referenced in standards (e.g., TS 23.501, TS 23.502, and TS 23.503) defined by the International Telecommunication Union (ITU) or the 3GPP, and components included in a network structure of FIG. 1 may refer to physical entities, software that performs separate functions, or hardware combined with the software. In the drawings, reference symbols shown as Nx, such as N1, N2, and N3, indicate known interfaces between NFs in a 5G core network (CN).

FIG. 1 illustrates a configuration example of a wireless communication system supporting multiple NSACFs according to an embodiment of the disclosure.

The system of FIG. 1 may include a 5G core network (5GC), a base station 110, and a UE 100. The 5GC may include an access and mobility management function (AMF) 120 that manages mobility of the UE 100, a session management function (SMF) 135 that manages a session, a user plane function (UPF) 130 connected to a data network (DN) 175 to perform a data forwarding function, a policy control function (PCF) 140 that provides a policy control function, a user data management (UDM) 145 that provides a function of managing data, such as subscriber data and policy control data, a unified data repository (UDR, not shown) that stores data on various network functions, such as the UDM, a network repository function (NRF) 150 that manages registration information about NFs, a network slice selection function (NSSF) 160 that selects a network slice instance serving the UE 100, a network data analytics function (NWDAF) 165 that provides analytics for operating a 5G system, and a network slice admission control function (NSACF) 180 that monitors and controls the number of registered UEs in a network slice(s) and the number of PDU sessions. An application function (AF) 170 that provides an application service communicates with the 5GC.

The AMF 120 is an entity that manages access and mobility of the UE 100. For example, the AMF 120 may perform a network function, such as registration, connection, reachability, mobility management, access confirmation, authentication, and mobility event generation of the UE 100. The SMF 135 may perform a function of managing a protocol data unit (PDU) session of the UE 101. For example, the SMF 135 may perform a network function, such as a session management function through establishing, modifying, and releasing a session and maintaining a tunnel between the UPF 130 and the RAN 110, a function of allocating and managing an Internet Protocol (IP) address of the UE 100, and user plane selection and control. The UPF 130 may perform a data processing function of forwarding data transmitted by the UE 100 to the DN 175, which is an external network, or forwarding data introduced from the DN 175 to the UE 100. Further, the UPF 130 may perform a network function, such as the role of an anchor between radio access technologies (RATs), provision of a connection between a PDU session and the AF 170, packet routing and forwarding, packet inspection, application of a user plane policy, traffic usage report writing, and buffering. The PCF 140 may manage operator policy information for providing a service in the 5G system, and the UDM 145 may perform functions of generating authentication information for 3GPP security, managing a list of network functions (NF) supporting the UE 100, and managing subscription information.

In the disclosure, the NRF 150 may store information per NSACF (e.g., SA information per NSACF, responsible S-NSSAI(s) or DNN(s) information, and NSAC capability information). The NSACF 180 may monitor and control the number of registered UEs and the number of PDU sessions in a network slice(s) to be subjected to network slice admission control (NSAC), based on the maximum number of registered UEs and the maximum number of PDU sessions per network slice.

In the 3GPP, a conceptual link connecting the foregoing NFs in the 5G system is defined as a reference point. Reference points included in a 5G system architecture shown in FIG. 1 are illustrated below.
- N1: Reference point between UE and AMF
- N2: Reference point between (R)AN and AMF
- N3: Reference point between (R)AN and UPF
- N4: Reference point between SMF and UPF
- N5: Reference point between PCF and AF
- N6: Reference point between UPF and DN
- N7: Reference point between SMF and PCF
- N8: Reference point between UDM and AMF
- N9: Reference point between two core UPFs
- N10: Reference point between UDM and SMF
- N11: Reference point between AMF and SMF
- N12: Reference point between AMF and AUSF
- N13: Reference point between UDM and authentication server function (AUSF)
- N14: Reference point between two AMFs
- N15: Reference point between PCF and AMF in non-roaming scenario; reference point between PCF and AMF within visited network in roaming scenario

The 5G system supports a technology called a session and service continuity (SSC) mode, which supports session continuity to improve the quality of experience (QoE) of a user or to support a mission-critical service. There are three SSC modes, and one of SSC modes 1, 2, and 3 may be configured for a PDU session in the 5G system. For example, in SSC mode 1, a UPF serving as an anchor in a PDU session is maintained until a UE releases the PDU session. In SSC mode 2, when an existing PDU session for a UE is released and a new PDU session is established in the 5G system, a UPF serving as an anchor in the previous PDU session may be changed to another UPF in the new PDU session. In SSC mode 3, a PDU session may be applied only to an IP type, and when a UPF serving as an anchor is changed to a new UPF, a connection to the new UPF is established before a connection to the previous UPF is released. SSC mode 3 is a technology called make-before-break, in which when determining to release a PDU session of SSC mode 3 being used by a UE, a network establishes a new PDU session that may replace the PDU session and then releases the existing PDU session, thereby supporting session continuity. The UE may move traffic flows being transmitted/received through the existing PDU session to the new PDU session before the existing PDU session is released, thereby maintaining session continuity.

In the 5G system, network slicing refers to a technology and structure enabling a plurality of independent logical networks virtualized in one physical network. The 5G system, such as the example of FIG. 1, supports network slicing (which may alternatively be referred to as a network slice), and traffic relating to different network slices may be processed by different PDU sessions. A PDU session may refer to an association between a UE and a data network that provides a PDU connection service. A network slice is a set of network functions (NF) for supporting various services with different characteristics, such as a broadband communication service, massive IoT, and a mission-critical service including V2X, and may be understood as a technology for logically configuring a network and separating different network slices. Thus, even though a communication failure occurs in a network slice, communication in another network slice is not affected, making it possible to provide a stable communication service. In the disclosure, the term "slice" may be used interchangeably with "network slice." In this network environment, a UE may access a plurality of network slices when provided with various services. A network operator may configure a network slice, and may allocate a network resource suitable for a specific service for each network slice or each set of network slices. A network resource may refer to an NF, a logical resource provided by the NF, or a radio resource allocated by a base station.

To satisfy a specialized requirement of a service/application, a network operator may configure a virtual end-to-end network called a network slice to provide a service. For example, a network operator may configure network slice A to provide a mobile broadband service, network slice B to provide a vehicular communication service, and network slice C to provide a broadcast service. That is, in the 5G system, each service may be efficiently provided to a UE through a network slice specialized for a characteristic of the service. Here, the network slice may be identified by an identifier, which is single-network slice selection assistance information (S-NSSAI). A network may transmit a set of slices (allowed NSSAI(s)) allowed for a UE in a UE registration procedure (e.g., a UE registration procedure), and the UE may transmit and receive application data through a PDU session generated through one S-NSSAI (i.e., a network slice) among the allowed NSSAI(s).

In FIG. 1, when the UE 100 registers with the network, the UE 100 may transmit identifier information about requested network slices (i.e., requested S-NSSAIs) to the AMF 120, and the AMF 120 may provide the UE 100 with information about network slices available to the UE 100 (allowed NSSAI) in view of the requested S-NSSAIs and subscriber information. Even though the UE 100 does not provide the information about the requested slices to the AMF 120, the AMF 120 may provide the UE 100 with the allowed NSSAI, and the allowed NSSAI may include information about default configured slices (default configured NSSAIs) and information about slices configured as the default (i.e., default subscribed S-NSSAIs) among subscribed slices included in subscription information about the UE 100.

When no slice is included in the allowed NSSAI (e.g., when the default configured NSSAI and the default subscribed S-NSSAIs do not exist or are unavailable), the AMF 120 may transmit a network registration rejection message to the UE 100 along with a cause code indicating registration rejection due to no available slice.

In the 5G system, whether to allow a network slice may be determined (i.e., whether to include the slice in the allowed NSSAI may be determined) based on the number of UEs currently registered in the network slice and the maximum number of registered UEs allowed for the network slice. In a network slice-specific authentication and authorization (NSSAA) procedure, an authentication procedure may be performed with authentication, authorization, and accounting (AAA)-S, which is a server performing authentication of the slice through an NSSAA function (NSSAAF, not shown), based on credential information about the UE 100 for the slice. Here, whether to allow the slice may be determined (i.e., whether to include the slice in the allowed NSSAI may be determined) considering an authentication result.

To transmit and receive data to and from a specific data network (DN) through allowed slices (allowed NSSAIs), the UE 100 may select one of the allowed slices, may request the slice to generate a PDU session to a specific data network name (DNN), and may transmit and receive data through the generated PDU session. The PDU session may include a plurality of traffic flows, and the traffic flows may be divided into two types, for example, a guaranteed bitrate quality-of-service flow (GBR QoS flow) and a non-GBR QoS flow.

In the 5G system, the following quotas may be managed per network slice through an NSAC procedure. For example, quotas, such as the number of registered UEs per network slice and the number of established PDU sessions per network slice, may be managed. In a procedure of the NSACF 180 for the number of registered UEs per network slice, when the UE 100 is registered in and deregistered from a network slice, the AMF 120 may include an indication of requesting an increase or decrease in the number of registered UEs in the network slice in a message to be transmitted to the NSACF 180. The NSACF 180 may count the number of registered UEs per network slice, and may reject a request to increase the number of UEs in a corresponding network slice from the AMF 120 when the number of registered UEs per network slice reaches a predefined maximum value. In a procedure of the NSACF 180 for the number of PDU sessions per network slice, when generating or releasing a PDU session per network slice, the SMF 135 may request the NSACF 180 to increase or decrease the number of PDU sessions per network slice. The NSACF 180 may count the number of PDU sessions per network slice, and may reject a request to increase the number of PDU sessions for a corresponding network slice from the SMF 135 when the number of PDU sessions per network slice reaches a predefined maximum value.

Although one NSACF 180 is shown in the example of FIG. 1 for convenience of explanation, a method of supporting a plurality of NSACFs may be considered in the 5G system. In this case, the maximum number of registered UEs per network slice and the maximum number of PDU sessions per network slice may be configured in each NSACF of the plurality of NSACFs. Further, regional information may be defined as the service area (SA) of each NSACF, and an NSAC procedure may be performed only for a UE located within the SA, thereby achieving load distribution. However, to support multiple NSACFs with SAs per NSACF, required are a method for discovering and selecting an NSACF according to a change in the location of a UE and a method for preventing a UE or a PDU session already accepted for a specific network slice from being rejected (i.e., for supporting service continuity) as an NSACF is changed and the number of registered UEs reaches a maximum value or the number of PDU sessions per network slice reaches a maximum number in a new NSACF.

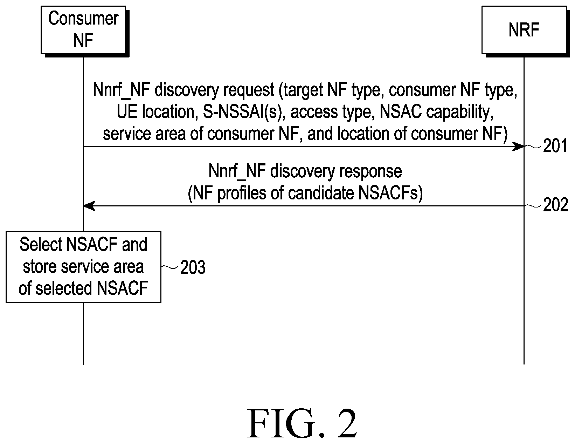

FIG. 2 illustrates a location-based NSACF discovery/selection procedure in a wireless communication system supporting multiple NSACFs according to an embodiment of the disclosure. In an example of FIG. 2, a consumer NF may be an AMF and/or SMF, and a basic function of each NF involved in the procedure of FIG. 2 may be referenced in a description of FIG. 1.

Referring to FIG. 2, in step 201, when performing NSACF discovery, an NSACF selection function included in the consumer NF (e.g., the AMF or SMF) may transmit a request message including at least one piece of information of a target NF type indicating an NSACF, a consumer NF type, UE location, a PLMN ID, a DNN(s), S-NSSAI(s), an access type, NSAC capability, the service area of the consumer NF, and the location of the consumer NF to an NRF.

The NRF may store information about each NSACF (e.g., service area (SA) information about each NSACF, S-NSSAI(s) or DNN(s) information for which each NSACF is responsible, and NSAC capability information). When receiving the UE location from the consumer NF, the NRF may consider an NSACF(s) with an SA including the UE location as a candidate NSACF for discovery/selection. Further, when receiving the public land mobile network (PLMN) ID or a stand-alone non-public network (SNPN) ID from the consumer NF, the NRF may consider an NSACF(s) in charge of the received PLMN ID or SNPN ID as a candidate NSACF.

In step 202, when determining candidate NSACFs for discovery/selection, the NRF may transmit a response message including at least one of SA information about each NSACF of the candidate NSACFs and NF profile information to the consumer NF. The SA information about each NSACF of the candidate NSACFs and the NF profile information may be referred to as information related to the candidate NSACFs.

When receiving the response message from the NRF in step 202, the NSACF selection function in the consumer NF may select an NSACF from among the candidate NSACFs, based on information included in the response message, and may store the SA information about each NSACF of the candidate NSACFs and the NF profile information in step 203. When selecting the NSACF, the NSACF selection function in the consumer NF may consider (use) at least one piece of information among the SA information about each NSACF, the S-NSSAI(s) supported by each NSACF, a DNN(s), the PLNM ID, the SNPN ID, and UE location information.

In a case where the consumer NF stores information about a previously selected NSACF and the information about the candidate NSACFs received from the NRF in step 202, when the UE location is changed to be outside the selected SA, the consumer NF may select an NSACF that satisfies the changed UE location among the candidate NSACFs as a new NSACF. When there are no satisfying NSACFs among the candidate NSACFs, the consumer NF may transmit the request of step 201 to the NRF again, or may determine that an NSACF fails to be found.

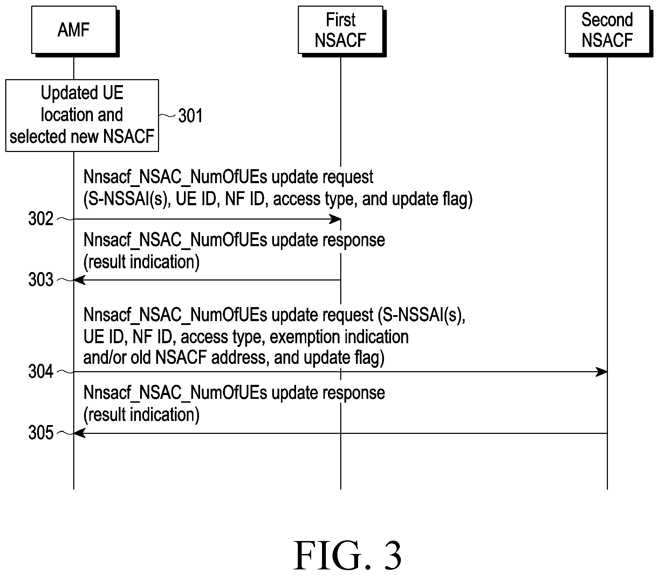

FIG. 3 is a flowchart illustrating an NSAC exemption procedure performed by an AMF in case that an NSACF is changed in a wireless communication system supporting multiple NSACFs according to an embodiment of the disclosure. An example of FIG. 3 illustrates a method for the AMF as a consumer NF to support service continuity in case that an NSACF is changed according to UE location in a procedure of updating the number of registered UEs per network slice. A basic function of each NF involved in the procedure of FIG. 3 may be referenced in the description of FIG. 1. In the example of FIG. 3, a first NSACF is an old NSACF before an NSACF change, and a second NSACF is a new NSACF changed according to UE location.

Referring to FIG. 3, in step 301, when the UE location is changed to be outside/out of the service area (SA) of the old NSACF (i.e., the previously selected NSACF), the AMF may select the new NSACF according to the UE location of a corresponding UE.

In step 302, when the second NSACF is selected as the new NSACF, the AMF transmits a first update request message including at least one of S-NSSAI(s), a UE ID, an NF ID, an access type, and an update flag configured to a decrease with respect to a network slice(s) that requires updating for each UE (i.e., network slices already included in the allowed NSSAI of the UE) to the first NSACF, which is the old NSACF.

In step 303, when receiving the first update request message, the first NSACF transmits a first update response message to the AMF. The first update response message may include a result indication per network slice, and the first NSACF may configure the result indication to one of values corresponding to "'maximum number of UEs registered per S-NSSAI is reached" or "maximum number of UEs registered per S-NSSAI is not reached" according to the number of UEs per network slice. In step 304, when the second NSACF is selected as the new NSACF as above, the AMF may determine NSAC exemption for the network slice(s) that requires updating for the UE (e.g., the network slice(s) included in the previous allowed NSSAI). The NSAC exemption is introduced to support service continuity when the NSACF is changed to the new NSACF.

In the disclosure, since regional information is defined as the service area (SA) of each NSACF, the previous allowed NSSAI for the UE may be understood to correspond to S-NSSAI with which the UE previously registers in one service area (SA).

The following indication indicating the NSAC exemption may be understood as indication information determined based on a network slice previously allowed for the UE (i.e., the previous allowed NSSAI).

Specifically, the AMF may perform the NSAC exemption for the network slice(s) that requires updating through one of the following methods 1), 2), and 3):
1) Not transmitting a request to update the number of UEs registered per network slice to the second NSACF;
2) Ignoring information indicating that the maximum number of UE registered is reached when a request to update the number of UEs registered per network slice is transmitted to the second NSACF but a response message received from the second NSACF includes the information; and
3) Transmitting a second update request message including an exemption indication for NSAC exemption and/or first NSACF information (i.e., old NSACF information) to the second NSACF.

In the disclosure, the term "exemption indication for NSAC exemption" is an example, and may be referred to by various terms corresponding to the indication.

The example of FIG. 3 illustrates the method 3) in which the AMF transmits the second update request message to the second NSACF in step 304, and the second update request message may include at least one of S-NSSAI(s), a UE ID, an NF ID, an access type, the exemption indication and/or the old NSACF information, and an update flag. The second update request message may or may not include the exemption indication. Accordingly, when receiving the second update request message, the second NSACF may identify whether the exemption indication is included, and may perform the following step.

In step 305, the AMF receives a second update response message including a result indication from the second NSACF having received the second update request message including the exemption indication. That is, when the second NSACF receives the second update request message including the exemption indication from the AMF in step 304, the second NSACF may accept the request for service continuity, based on the exemption indication. Specifically, the second NSACF having received the exemption indication may include a result indication value corresponding to "maximum number of UEs registered per S-NSSAI not reached" in the second update response message with respect to a network slice(s) corresponding to the S-NSSAI(s) in the second update request message even when the maximum number of registered UEs (i.e., a threshold) is reached.

When the exemption indication includes information about a network slice(s) corresponding to exemption, the second NSACF having received the exemption indication may include a result indication value corresponding to "maximum number of UEs registered per S-NSSAI is not reached" in the second update response message with respect to a network slice(s) included in the exemption indication among the network slice(s) corresponding to the S-NSSAI(s) in the second update request message even when the maximum number of registered UEs is reached.

When receiving the first NSACF information (old NSACF information) from the AMF in step 304, although not shown in FIG. 3, the second NSACF may identify whether the UE is registered through the first NSACF, and may request the first NSACF to decrease the number of registered UEs for the UE and the network slice.

In the embodiment of FIG. 3 described above, the AMF may omit step 302 and step 303, in which case the second update request message in step 304 may include the first NSACF information (old NSACF information).

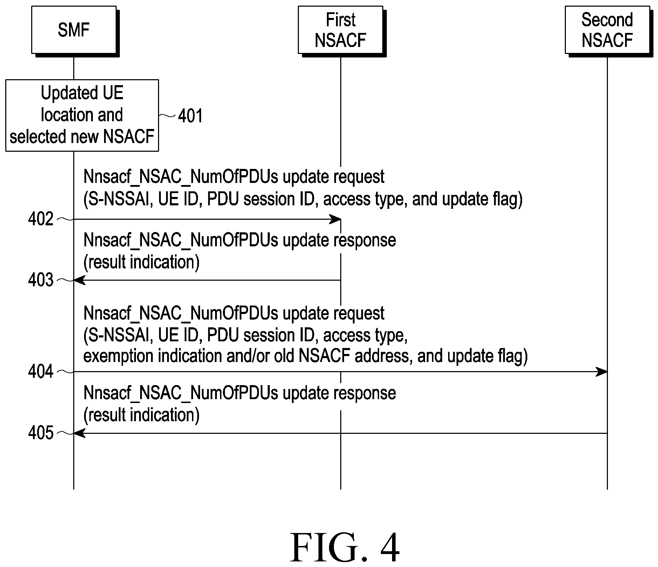

FIG. 4 is a flowchart illustrating an NSAC exemption procedure performed by an SMF in case that an NSACF is changed in a wireless communication system supporting multiple NSACFs according to an embodiment of the disclosure. An example of FIG. 3 illustrates a method for the SMF as a consumer NF to support service continuity in case that an NSACF is changed according to UE location in a procedure of updating the number of PDU sessions per network slice. A basic function of each NF involved in the procedure of FIG. 4 may be referenced in the description of FIG. 1. In the example of FIG. 4, a first NSACF is an old NSACF before an NSACF change, and a second NSACF is a new NSACF changed according to UE location.

Referring to FIG. 4, in step 401, when the UE location is changed to be outside/out of the service area (SA) of the old NSACF (i.e., the previously selected NSACF), the SMF may select the new NSACF according to the UE location of a corresponding UE. In another example, when receiving NSACF information about a selected NSACF from an AMF, the SMF may select the NSACF.

In step 402, when the second NSACF is selected as the new NSACF, the SMF transmits a first update request message including at least one of S-NSSAI(s), a UE ID, an NF ID, an access type, and an update flag configured to a decrease with respect to a network slice(s) that requires updating for each UE (i.e., network slices already included in the allowed NSSAI of the UE) to the first NSACF, which is the old NSACF.

In step 403, when receiving the first update request message, the first NSACF transmits a first update response message including a result indication to the SMF. The first update response message may include a result indication per network slice, and the result indication per network slice may indicate "maximum number of PDU session per S-NSSAI is reached" or "maximum number of PDU sessions per S-NSSAI is not reached".

In step 404, when the second NSACF is selected as the new NSACF as above, the SMF may determine NSAC exemption in a case of a request for a PDU session for the network slice(s) that requires updating for the UE (e.g., the network slice(s) included in the previous allowed NSSAI), in a case of not requesting generation of a new PDU session, in a case of a request for SSC mode 3 or generation of a PDU session due to SSC mode 3, or in a case of receiving an NSAC exemption request for the network slice(s) from the AMF.

Specifically, the SMF may perform the NSAC exemption for the network slice(s) that requires updating through one of the following methods 1), 2), and 3):
1) Not transmitting a request to update the number of PDU sessions per network slice to the second NSACF;
2) Ignoring information indicating that the maximum number of PDU sessions is reached and an update request is rejected when a request to update the number of PDU sessions per network slice is transmitted to the second NSACF but a response message received from the second NSACF includes the information; and
3) Transmitting a second update request message including an exemption indication for NSAC exemption and/or first NSACF information (i.e., old NSACF information) to the second NSACF.

The example of FIG. 4 illustrates the method 3) in which the SMF transmits the second update request message to the second NSACF in step 404, and the second update request message may include at least one of S-NSSAI, a UE ID, a PDU session ID, an access type, the exemption indication or an old NSACF address, and an update flag.

In step 405, the SMF receives a second update response message including an update result (e.g., a result indication) from the second NSACF having received the second update request message including the exemption indication. The second NSACF having received the exemption indication may include a result indication value corresponding to "maximum number of PDU sessions per S-NSSAI is not reached" in the second update response message with respect to a network slice(s) corresponding to the S-NSSAI(s) in the second update request message even when the maximum number of PDU sessions is reached.

When the exemption indication includes information about a network slice(s) corresponding to exemption, the second NSACF having received the exemption indication may include a result indication value corresponding to "maximum number of PDU sessions per S-NSSAI is not reached" in the second update response message with respect to a slice(s) included in the exemption indication among the network slice(s) corresponding to the S-NSSAI(s) in the second update request message even when the maximum number of PDU sessions is reached.

When receiving the first NSACF information (old NSACF information) from the SMF in step 404, although not shown in FIG. 4, the second NSACF may identify whether a corresponding PDU session UE is registered through the first NSACF, and may request the first NSACF to decrease the number of PDU sessions for the network slice.

In the embodiment of FIG. 4 described above, the SMF may omit step 402, in which case the second update request message in step 404 may include the first NSACF information (old NSACF information).

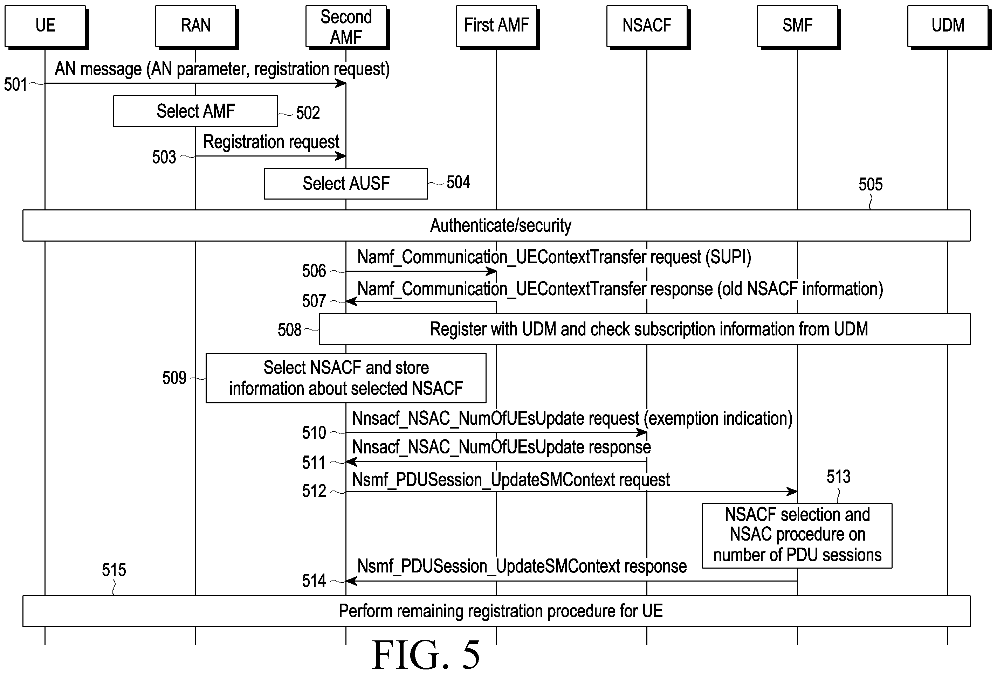

FIG. 5 is a flowchart illustrating a procedure of storing an NSACF selected for NSAC exemption in UE context in a UE registration procedure in a wireless communication system supporting multiple NSACFs according to an embodiment of the disclosure.

A basic function of each NF involved in the procedure of FIG. 5 may be referenced in the description of FIG. 1. In an example of FIG. 5, it is assumed that a first AMF is an old AMF before UE location is changed and a second AMF is a new AMF changed according to the UE location.

Referring to FIG. 5, in step 501, a UE transmits an AN message (AN parameter, registration request) to an RAN in the registration procedure. The registration request message may include at least one of a UE identifier (subscription concealed identifier (SUCI)), a 5G-globally unique temporary identifier (GUTI) (or a permanent equipment identifier (PEI)), requested NSSAI, and UE mobility management (MM) core network capability.

In step 502, the RAN selects an AMF, based on information in the AN message received from the UE.

In step 503, the RAN transmits an N2 message (N2 parameter, registration request) to the second AMF, which is the new AMF, to request registration of the UE. The N2 parameter includes at least one of a selected PLMN ID, UE location information, and a UE context request.

In step 504, when determining that UE authentication is necessary, the second AMF selects an authentication server function (AUSF) for authentication of the UE, based on the UE identifier (SUCI or subscription permanent identifier (SUPI)).

In step 505, an authentication procedure for the UE is performed through the selected AUSF. In the authentication procedure, when there is no non-access-stratum (NAS) security context for the UE, a procedure for obtaining the NAS security context is performed.

In step 506, the changed second AMF (i.e., the new AMF) may request UE context from the first AMF (i.e., the old AMF).

In step 507, UE context information transmitted by the first AMF to the second AMF in response to the request in step 506 may include information about the NSACF before the AMF change of the UE (i.e., information including at least among the address of the selected NSACF and service area (SA) information, referred to as old NSACF information). Further, the UE context information may include old NSACF information about an NSACF that monitors and controls the number of UEs registered per network slice and old NSACF information about the NSACF that monitors and controls the number of PDU sessions per network slice.

When the old NSACF information is not included in the UE context information, although not shown in FIG. 5, the second AMF may perform NSACF discovery through an NRF.

In step 508, when subscription information about the UE is needed, the second AMF may select a UDM, based on the SUPI, which is the UE identifier, and the UDM may select a UDR in which the subscription information about the UE is stored. The second AMF may request access and mobility subscription information about the UE from the UDM through a Nudm_SDM_Get Request (SUPI, access and mobility subscription data) message. The UDM may transmit the requested subscription information about the UE to the second AMF via a Nudm_SDM_Get Response message in response to the Nudm_SDM_Get Request. Here, the UDM may obtain the information to be transmitted to the second AMF from the UDR, and may transmit the information to the second AMF.

In step 509, when the UE location of the UE is changed to be outside/out of the service area (SA) of a currently selected NSACF, the second AMF may select a new NSACF for the UE as in the embodiment of FIG. 3. When the new NSACF is selected, the second AMF may store information about the selected NSACF (hereinafter, "NSACF information") (NSACF ID, NSACF address, and NSACF SA) in the UE context. Here, there may be NSACF information about the number of registered UEs and NSACF information for controlling the number of PDU sessions.

In the disclosure, the AMF may perform an NSAC procedure on network slices considered as allowed NSSAI of the UE. As described in the embodiment of FIG. 3, the AMF may determine NSAC exemption for at least one slice among the network slices considered as the new allowed NSSAI of the UE. The network slice to be exempted from NSAC may be determined as a network slice(s) included in previous allowed NSSAI in the UE context (or a network slice(s) for which the NSAC procedure has already succeeded) for service continuity.

Therefore, in the example of FIG. 5, the second AMF may perform the NSAC exemption for network slices that require updating through one of the following methods 1), 2), and 3):
1) Not transmitting a request to update the number of UEs registered per network slice to the NSACF;
2) Ignoring information indicating that the maximum number of registered UEs is reached and an update request is rejected when a request to update the number of UEs registered per network slice is transmitted to the NSACF but a response message received from the NSACF includes the information; and
3) Transmitting an update request message including an exemption indication for NSAC exemption and/or old NSACF information before the AMF change to the NSACF.

In step 510, when the second AMF determines the NSAC exemption, the second AMF may transmit an update request message including at least one of S-NSSAI(s), a UE ID, an NF ID, an access type, the exemption indication or the old NSACF information, and an update flag to the NSACF.

In step 511, the AMF receives an update response message including an update result (e.g., a result indication) from the NSACF having received the update request message including the exemption indication. When receiving the exemption indication with respect to the network slice(s) that requires updating, the NSACF having received the exemption indication may not include an indication corresponding to rejection in the update result (result indication) included in the updated response message even though the maximum number of registered UEs is reached.

When receiving the old NSACF information from the AMF in step 510, the NSACF may identify whether the UE is registered through the old NSACF, and may request the old NSACF to decrease the number of registered UEs for the UE and the network slice.

In step 512, when a PDU session update is required, the AMF may request a PDU session update from an SMF. Here, when a new NSACF is selected, the AMF may transmit a session update request message including at least one of S-NSSAI, a DNN, UE location, a PDU session ID, an exemption indication, and NSACF information to the SMF.

When the UE location received via the session update request message in step 512 is changed to be outside/out of the SA of the currently selected NSACF, the SMF may select a new NSACF for the UE in step 513. Further, when receiving the NSACF information from the AMF through the session update request message, the SMF may select an NSACF corresponding to the NSACF information as the new NSACF. When the session update request message received from the AMF in step 512 includes the aforementioned exemption indication, the SMF may perform NSAC exemption on a PDU session for the S-NSSAI of the session update request message received from the AMF. The SMF performs the PDU session update based on the session update request message received from the AMF in step 512.

The SMF transmits a PDU session update response message including a PDU session update result to the AMF in step 514, and the remaining UE registration procedure is performed in step 515.

According to the foregoing embodiments of the disclosure, as the location of a UE is changed to support multiple NSACFs with SAs per NSACF in the 5G system, a corresponding NSACF may be efficiently discovered and selected to efficiently support the multiple NSACFs. Further, according to the embodiments of the disclosure, a UE or a PDU session already accepted for a network slice may be prevented from being rejected as an NSACF is changed and the maximum number of registered UEs and/or the maximum number of PDU sessions per network slice are reached in a new NSACF, thereby providing service continuity for the UE and the PDU session in a multiple NSACF environment and thus improving user experience.

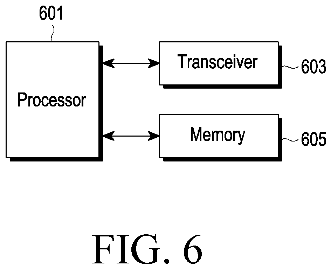

FIG. 6 illustrates a configuration example of a network entity according to an embodiment of the disclosure.

The network entity of FIG. 6 may be one of the UE, the base station (RAN), or the network function (NF), such as the AMF, the SMF, the NSACF, or the UDM, described in the embodiments of FIG. 1 to FIG. 5.

The network entity according to an embodiment of the disclosure may include a processor 601 configured to control the overall operation of the network entity, a transceiver 603 including a transmitter and a receiver, and memory 605. The network entity is not limited to the foregoing example, and may include more components or fewer components than those illustrated in FIG. 6.

According to an embodiment of the disclosure, the transceiver 603 may transmit and receive a signal to and from at least one of other network entities or a UE. The signal transmitted and received may include at least one of control information and data.

According to an embodiment of the disclosure, the processor 601 may control the overall operation of the network entity to perform an operation according to one of the foregoing embodiments of FIG. 1 to FIG. 5 or a combination of two or more of the embodiments. The processor 601, the transceiver 603, and the memory 605 are not necessarily configured as separate modules, but may be configured as a single component in the form of a single chip. The processor 601 may be an application processor (AP), a communication processor (CP), a circuit, an application-specific circuit, or at least one processor. The transceiver 603 may include at least one communication interface configured to transmit and receive a signal to and from another network entity via a cable/wirelessly.

According to an embodiment of the disclosure, the memory 605 may store data, such as a basic program, an application program, and configuration information, for the operation of the network entity. The memory 605 may provide the stored data upon request from the processor 601. The memory 605 may be configured as a storage medium, such as ROM, RAM, a hard disk, CD-ROM, and a DVD, or a combination of storage media. The memory 605 may include a plurality of memories. The processor 601 may perform at least one of the foregoing embodiments, based on a program for performing an operation according to at least one of the foregoing embodiments of the disclosure stored in the memory 605.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

## Claims

1. A method performed by a network slice admission control function (NSACF) for monitoring and controlling a number of user equipments (UEs) registered per network slice in a wireless communication system supporting multiple NSACFs, the method comprising:
receiving a network slice admission control (NSAC)-related request message from an access and mobility management function (AMF) managing mobility of a UE;
identifying whether the received NSAC-related request message comprises an indication based on a network slice previously allowed for the UE; and
accepting the requesting message in case that the received NSAC-related request message comprises the indication.

2. The method of claim 1, wherein the accepting comprises accepting the request message for service continuity even in case that the received NSAC-related request message comprises the indication and a number of UEs registered for the allowed network slice in the NSACF reaches a maximum number of registered UEs.

3. The method of claim 1, wherein the previously allowed network slice corresponds to single-network slice selection assistance information (S-NSSAI) with which the UE previously has been registered in one service area.

4. The method of claim 1, wherein the NSAC-related request message is received based on a change in location of the UE, and the AMF is an AMF changed according to the change in the location of the UE.

5. The method of claim 1, wherein the accepting further comprises transmitting a response message comprising acceptance information about the NSAC-related request message to the AMF in response to the received NSAC-related request message comprising the indication.

6. A network slice admission control function (NSACF) for monitoring and controlling a number of user equipments (UEs) registered per network slice in a wireless communication system supporting multiple NSACFs, the NSACF comprising:
a communication interface; and
a processor configured to receive a network slice admission control (NSAC)-related request message from an access and mobility management function (AMF) managing mobility of a UE through the communication interface, to identify whether the received NSAC-related request message comprises an indication based on a network slice previously allowed for the UE, and to accept the requesting message in case that the received NSAC-related request message comprises the indication.

7. The NSACF of claim 6, wherein the processor is configured to accept the request message for service continuity even in case that the received NSAC-related request message comprises the indication and a number of UEs registered for the allowed network slice in the NSAACF reaches a maximum number of registered UEs.

8. The NSACF of claim 6, wherein the previously allowed network slice corresponds to single-network slice selection assistance information (S-NSSAI) with which the UE previously has been registered in one service area.

9. The NSACF of claim 6, wherein the NSAC-related request message is received based on a change in location of the UE, and the AMF is an AMF changed according to the change in the location of the UE.

10. The NSACF of claim 6, wherein the processor is further configured to transmit a response message comprising acceptance information about the NSAC-related request message to the AMF through the communication interface in response to the received NSAC-related request message comprising the indication.

11. An access and mobility management function (AMF) for managing mobility of a user equipment (UE) in a wireless communication system supporting multiple network slice admission control functions (NSACFs), the AMF comprising:
a communication interface; and
a processor configured to determine an indication based on a network slice previously allowed for the UE in case that transmission of a network slice admission control (NSAC)-related request message to an NSACF configured to monitor and control a number of UEs registered per network slice is triggered, and to transmit the NSAC-related request message comprising the indication to the NSACF through the communication interface.

12. The AMF of claim 11, wherein the previously allowed network slice corresponds to single-network slice selection assistance information (S-NSSAI) with which the UE previously registers in one service area.

13. The AMF of claim 11, wherein the processor is configured to trigger the transmission of the NSAC-related request message, based on a change in location of the UE, and
the AMF is an AMF changed according to the change in the location of the UE.

14. The AMF of claim 11, wherein the processor is further configured to receive a response message comprising acceptance information about the NSAC-related request message from the NSACR through the communication interface in response to the transmission of the NSAC-related request message.

15. The AMF of claim 14, wherein the NSAC-related request message comprising the indication is accepted even in case that a number of UEs registered for the allowed network slice in the NSAACF reaches a maximum number of registered UEs.
